# EUROPEAN PATENT SPECIFICATION

(11) **EP 4 494 517 B1**
(45) Date of publication and mention of the grant of the patent: **02.12.2026**
(21) Application number: 22955509.9
(22) Date of filing: 17.10.2022
(51) Int. Cl.: A47B 19/00, G10G 7/02, F16M 11/10, F16M 13/00, F16M 11/38, F16M 11/04, F16M 11/20, F16M 13/02, A47B 19/08

(54) **FOLDING STAND**
ZUSAMMENKLAPPBARER STÄNDER
SUPPORT PLIANT

(30) Priority: 19.08.2022 CN 202222200609 U
(43) Date of publication of application: 22.01.2025
(73) Proprietor: Shenzhen OSM Tech Innovation Co., Ltd., Shenzhen, Guangdong 518004 (CN)
(72) Inventor: XIA, Meihua, Shenzhen, Guangdong 518004 (CN); LING, Hongjun, Shenzhen, Guangdong 518004 (CN)
(74) Representative: J A Kemp LLP
(86) International application number: PCT/CN2022/125657
(87) International publication number: WO 2024/036735

(56) References cited:
- CN-A- 108 477 833
- CN-A- 112 401 471
- CN-U- 202 711 675
- CN-U- 202 720 883
- CN-U- 208 044 928
- CN-U- 209 152 538
- CN-U- 212 461 126
- CN-U- 216 316 276
- CN-Y- 2 485 743
- CN-Y- 2 614 532
- JP-A- 2010 110 596
- US-A- 165 346
- US-A- 2 799 968
- US-A- 535 557
- US-A- 696 993
- US-B1- 6 260 812

## Description

### CROSS REFERENCE TO RELATED APPLICATIONS

The present application claims priority of the Chinese patent application No. 202222200609.6 filed on August 19, 2022 to the CNIPA, and entitled "foldable support bracket".

### TECHNICAL FIELD

The present application relates to the technical field of music stands, in particular relates to a foldable support bracket.

### BACKGROUND

The existing music stands comprise components such as feet, telescoping rods, and music score placement plates. Generally, the feet and the telescoping rods are telescoping structures that can be folded, but the music score placement plates cannot be completely folded, and thus requires the disassembling of parts. The music score placement plates occupy a large space, causing inconvenience for manufacturers during packaging and transporting, and are also extremely inconvenient for users to carry.

US2799968A is considered to be the closest prior art and discloses a music stand. US696993A discloses a music-rack. US535557A discloses a folding music-rack. US165346A discloses a music-stand. CN209152538 (U) discloses a portable music stand. CN216316276 (U) discloses a folding music stand with an extendable music stand. CN2614532 (Y) discloses a folding musical stand.

### SUMMARY OF THE INVENTION

The invention is defined in the independent claim. Further aspects and preferred embodiments are defined in the dependent claims. Any aspects, embodiments and examples of the present disclosure which do not fall under the scope of the appended claims do not form part of the invention and are merely provided for illustrative purposes.

The main purpose of the present application is to provide a foldable support bracket, which is intended to be collapsable and deployable in a foldable manner, so as to be convenient for carrying and using, and to facilitate packaging and transporting.

In order to achieve the above purpose, the present application provides a foldable support bracket that comprises:
a foot stand assembly;
a telescoping rod assembly, having a first end and a second end opposite to each other, wherein the foot stand assembly is provided on the first end of the telescoping rod assembly; and
a support assembly provided on the second end of the telescoping rod assembly in a collapsible manner, wherein the support assembly has a deployed state and a collapsed state;
wherein, the support assembly comprises at least a main support member, a first linkage component and a second linkage component, the main support member being rotatably arranged on the second end of the telescoping rod assembly by means of a rotatable shaft; the first linkage component being rotatably arranged on the main support member; and the second linkage component being rotatably arranged on the main support member;
wherein, in the deployed state, the first linkage component and the second linkage component are unfolded to form a support surface;
wherein, in the collapsed state, the first linkage component and the second linkage component are respectively attached along the main support member to form a rod-like structure.

The first linkage component is located on a top part of the main support member, and the second linkage component is located in a middle part of the main support member; the support assembly further comprises a third linkage component, the third linkage component being rotatably arranged at a bottom part of the main support member;
the first linkage component comprises a first top rod and a second top rod, and the first top rod and the second top rod are respectively rotatably arranged on the top part of the main support member;
the second linkage component comprises a first middle rod and a second middle rod, and the first middle rod and the second middle rod are respectively rotatably arranged on the middle part of the main support member;
the third linkage component comprises a first bottom rod and a second bottom rod, and the first bottom rod and the second bottom rod are respectively rotatably arranged on the bottom part of the main support member;
in the deployed state, the first top rod, the first middle rod and the first bottom rod are respectively located on one same side of the main support member, and the second top rod, the second middle rod and the second bottom rod are respectively located on the other side of the main support member, so as to form the support surface by unfolding the respective rods;
in the collapsed state, the first top rod, the second top rod, the first middle rod, the second middle rod, the first bottom rod and the second bottom rod are respectively attached along the main support member to form the rod-like structure.

The main support member is provided with a slide groove along its length, and an end of the first top rod and an end of the second top rod are both slidably arranged in the slide groove by a slidable rotary mechanism configured to adjust a width size of the support surface in order to match articles of different widths.

The slidable rotary mechanism comprises a slidable block, a first toothed block, a second toothed block and a first fixed block slidably arranged in the slide groove, one end of the first toothed block being fixed to the first top rod, the other end of the first toothed block being constrained between the slidable block and the first fixed block in a rotatable manner by a first rotation shaft, one end of the second toothed block being fixed to the second top rod, the other end of the second toothed block being constrained between the slidable block and the first fixed block in a rotatable manner by a second rotation shaft.

Optionally, the first middle rod and the second middle rod are tensile rods configured to adjust a length size of the support surface in order to match articles of different lengths.

Optionally, the support assembly further comprises a clamping assembly, the clamping assembly comprising a first compression member and a second compression member for clamping edges of both lateral sides of an article, the first compression member being arranged at an end portion of the first middle rod, the second compression member being arranged at an end portion of the second middle rod.

Optionally, the first compression member and the second compression member both comprise an upper shell, a lower shell, a press block and a torsion spring, the upper shell being fixed to a front surface of the tensile rod, the lower shell being connected to the upper shell and fixed to a back surface of the tensile rod, the upper shell being provided with two insertion holes for insertion of both ends of a torsion shaft, the torsion spring being sleeved on the torsion shaft, one end of the torsion spring abutting against and connected with the press block, the other end of the torsion spring abutting against and connected with the upper shell, an end of the press block is connected to the upper shell by the torsion shaft, wherein the press block is of transparent material.

Optionally, the slidable rotary mechanism further comprises two friction blocks, the slidable block comprising a slidable upper shell and a slidable lower shell, the slidable upper shell and the slidable lower shell enclosing a mounting cavity, the two friction blocks being placed in the mounting cavity, and groove walls on two lateral sides of the mounting cavity are both provided with an avoidance port for an outer end of each of the two friction blocks to pass through, one end of each of the two friction blocks being sleeved with a resilient member, the other end of each of the two friction blocks abutting against a groove wall on each of two lateral sides of the slide groove respectively.

Optionally, the first bottom rod and the second bottom rod are both provided with a pallet for holding a bottom of an article.

Optionally, an end of the first bottom rod and an end of the second bottom rod are both arranged on the main support member by means of a rotary assembly, the rotary assembly comprising a support block, a third toothed block, a fourth toothed block and a second fixed block provided on the main support member, one end of the third toothed block being fixed to the first bottom rod, the other end of the third toothed block being constrained between the support block and the second fixed block in a rotatable manner by a third rotation shaft, one end of the fourth toothed block being fixed to the second bottom rod, the other end of the fourth toothed block being constrained between the support block and the second fixed block in a rotatable manner by a fourth rotation shaft.

In the technical solution of the present application, the foldable support bracket comprises a foot stand assembly, a telescoping rod assembly and a support assembly; the telescoping rod assembly has a first end and a second end opposite to each other, wherein the foot stand assembly is provided on the first end of the telescoping rod assembly; the support assembly is provided on the second end of the telescoping rod assembly in a collapsible manner, wherein the support assembly has a deployed state and a collapsed state; wherein, the support assembly comprises at least a main support member, a first linkage component and a second linkage component, the main support member is rotatably arranged on the second end of the telescoping rod assembly by means of a rotatable shaft; the first linkage component is rotatably arranged on the main support member; and the second linkage component is rotatably arranged on the main support member; wherein, in the deployed state, the first linkage component and the second linkage component are unfolded to form a support surface; wherein, in the collapsed state, the first linkage component and the second linkage component are respectively attached along the main support member to form a rod-like structure. In this way, it achieves foldable collapsing and deploying, which is convenient for users to carry and use, and also facilitates manufacturers' packaging and transporting.

### BRIEF DESCRIPTION OF THE DRAWINGS

In order to more clearly explain the technical solutions in the embodiments of the present application or in the prior art, accompanying drawings that need to be used in the description of the embodiments or the prior art are briefly introduced below. Apparently, the accompanying drawings described below only represent some embodiments of the present application. For a person with ordinary skill in the art, other accompanying drawings are obtainable according to the structures shown in these accompanying drawings without expenditure of any creative labor.
FIG. 1 is a structural schematic diagram of the support assembly of the foldable support bracket in the collapsed state in an embodiment of the present application;
FIG. 2 is a structural schematic diagram of the support assembly of the foldable support bracket in the deployed state in an embodiment of the present application;
FIG. 3 is an explosive view of part A in FIG. 2;
FIG. 4 is an enlarged view of part B in FIG. 2;
FIG. 5 is a structural schematic diagram of the support assembly of the foldable support bracket in the deploying process in an embodiment of the present application;
FIG. 6 is a structural schematic diagram of the support assembly of the foldable support bracket in the deploying process in an embodiment of the present application;
FIG. 7 is a structural schematic diagram of the support assembly of the foldable support bracket in the deploying process in an embodiment of the present application;
FIG. 8 is a structural schematic diagram of the support assembly of the foldable support bracket in the deploying process in an embodiment of the present application;
FIG. 9 is a structural schematic diagram of the support assembly of the foldable support bracket in the deploying process in an embodiment of the present application; and
FIG. 10 is a structural schematic diagram of the support assembly of the foldable support bracket in a fully deployed state in an embodiment of the present application.

### Reference signs:

10, foot stand assembly; 20, telescoping rod assembly; 30, support assembly; 101, support surface; 31, main support member; 32, first linkage component; 33, second linkage component; 34, third linkage component; 321, first top rod; 322, second top rod; 331, first middle rod; 332, second middle rod; 341, first bottom rod; 342, second bottom rod; 40, clamping assembly; 411, upper shell; 412, lower shell; 413, press block; 311, rotatable shaft; 31a, slide groove; 51, slidable block; 52, first toothed block; 53, second toothed block; 54, first fixed block; 55, friction block; 56, resilient member; 343, pallet; 61, support block; 62, third toothed block; 63, fourth toothed block; 64, second fixed block.

The implementation of the purpose, functional features and advantages of the present application will be further described in conjunction with the embodiments and with reference to the drawings.

### DETAILED DESCRIPTION OF SPECIFIC EMBODIMENTS

Hereinafter, the technical solution in the embodiments of the present application will be clearly and completely described in combination with accompanying drawings in the embodiments of the application.

It should be noted that, if the embodiments of the present application involve directional indications (such as up, down, left, right, forward, back, ......), such directional indications are only used to explain the relative positional relationship, movement condition and the like among the various components in a specific attitude (as shown in the accompanying drawings), and if the specific attitude is changed, the directional indications would also change accordingly.

Furthermore, if the embodiments of the present application contain the descriptions of "first", "second", etc., the descriptions of "first", "second", etc. are used only for descriptive purposes, and are not to be understood as indicating or implying their relative importance or implicitly specifying the number of the indicated technical features. Thus, a feature defined as "first" or "second" may explicitly or implicitly include at least one of the features. In addition, the meaning of "and/or" appearing in the entire description is that three parallel embodiments are included, for example, "A and/or B" includes an A embodiment, or B embodiment, or an embodiment in which both A and B are satisfied. In addition, the technical solutions among the various embodiments may be combined with each other, but it must be based on the fact that a person with ordinary skill in the art is able to achieve it, and when a combination of the technical solutions appears to be contradictory or unachievable, it should be regarded that such a combination of the technical solutions does not exist, and is not included in the scope of protection claimed by the present application.

The present application provides a foldable support bracket suitable for supporting articles such as music scores, books or folders.

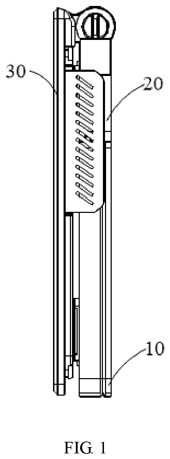

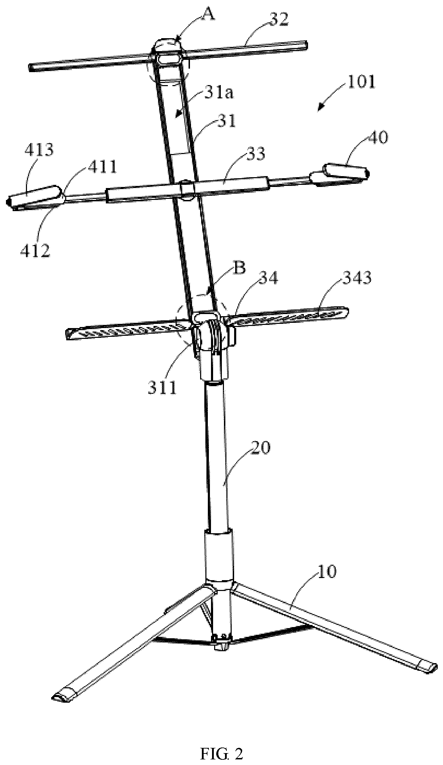

Referring to FIGS. 1 and 2, in an embodiment of the present application, the foldable support bracket comprises a foot stand assembly 10, a telescoping rod assembly 20 and a support assembly 30; the telescoping rod assembly 20 has a first end and a second end opposite to each other, wherein the foot stand assembly 10 is provided on the first end of the telescoping rod assembly 20; the support assembly 30 is provided on the second end of the telescoping rod assembly 20 in a collapsible manner, wherein the support assembly 30 has a deployed state and a collapsed state; wherein, in the deployed state, the support assembly 30 is unfolded to form a support surface 101 for supporting an article, as shown in FIG. 2; wherein, in the collapsed state, the support assembly 30 is folded to form a rod-like structure as a whole, as shown in FIG. 1.

In this embodiment, the foot stand assembly 10 may be a tripod or a multi-leg-stand, etc., for supporting the telescoping rod assembly 20 and the support assembly 30 on the ground or a table, and the foot stand assembly 10 may be slidably sleeved at the lower end of the telescoping rod assembly 20.

The telescoping rod assembly 20 may comprise a plurality of telescopic rods capable of adjusting the support height for the convenience of the user.

The support assembly 30 may comprise a plurality of support rods or support plates, and the support assembly 30 may be switched between the deployed state and the collapsed state by a rotary mechanism, a slidable mechanism, an articulating mechanism, or the like, which is not specifically limited herein.

In this embodiment, the support assembly 30 may comprise a main support member 31, a first linkage component 32, a second linkage component 33, and a third linkage component 34. It should be noted that, in order to form a support surface 101 for supporting articles such as a music score or a book, the support assembly 30 of the present foldable support bracket may comprise at least two linkage components, i.e., the first linkage component 32 and the second linkage component 33, the respective linkage components may be spaced apart on the main support member 31, and the number of linkage components is not limited herein.

In this embodiment, the main support member 31 is rotatably arranged on the second end of the telescoping rod assembly 20 by means of a rotatable shaft 311. The first linkage component 32 is rotatably arranged at the top of the main support member 31; the second linkage component 33 is rotatably arranged at the middle of the main support member 31; and the third linkage component 34 is rotatably arranged at the bottom of the main support member 31. In the deployed state, the first linkage component 32, the second linkage component 33, and the third linkage component 34 are unfolded to form a support surface 101; and in the collapsed state, the first linkage component 32, the second linkage component 33, and the third linkage component 34 are respectively attached along the main support member 31 to form a rod-like structure.

In the technical solution of the present application, the foldable support bracket comprises a foot stand assembly 10, a telescoping rod assembly 20 and a support assembly 30; the telescoping rod assembly 20 has a first end and a second end opposite to each other, wherein the foot stand assembly 10 is provided on the first end of the telescoping rod assembly 20; the support assembly 30 is provided on the second end of the telescoping rod assembly 20 in a collapsible manner, wherein the support assembly 30 has a deployed state and a collapsed state; wherein, in the deployed state, the support assembly 30 is unfolded to form a support surface 101 for supporting an article; wherein, in the collapsed state, the support assembly 30 is folded to form a rod-like structure as a whole. In this way, it achieves foldable collapsing and deploying, which is convenient for users to carry and use, and also facilitates manufacturers' packaging and transporting.

It should be noted that since the support assembly 30 is provided on the telescoping rod assembly 20 in a collapsible manner, after collapsing the support assembly 30, as shown in FIG. 1, it can be further folded and attached on one side of the telescoping rod assembly 20, which reduces the length size of the entire support bracket after folding as much as possible.

In order to further improve the convenience for folding and unfolding the support bracket, and to enhance the stability of its supported articles, with reference to FIGS. 2 to 10, the first linkage component 32 comprises a first top rod 321 and a second top rod 322, and the first top rod 321 and the second top rod 322 are respectively rotatably arranged on the top part of the main support member 31. The second linkage component 33 comprises a first middle rod 331 and a second middle rod 332, and the first middle rod 331 and the second middle rod 332 are respectively rotatably arranged on the middle part of the main support member 31. The third linkage component 34 comprises a first bottom rod 341 and a second bottom rod 342, and the first bottom rod 341 and the second bottom rod 342 are respectively rotatably arranged on the bottom part of the main support member.

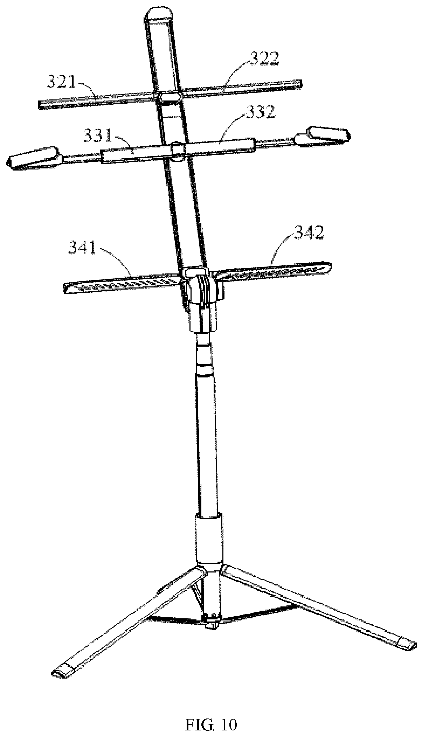

Referring to FIG. 10, in the deployed state, the first top rod 321, the first middle rod 331, and the first bottom rod 341 are respectively located on one same side of the main support member 31, and the second top rod 322, the second middle rod 332 and the second bottom rod 342 are respectively located on the other side of the main support member 31, so as to form the support surface 101 by unfolding the respective rods.

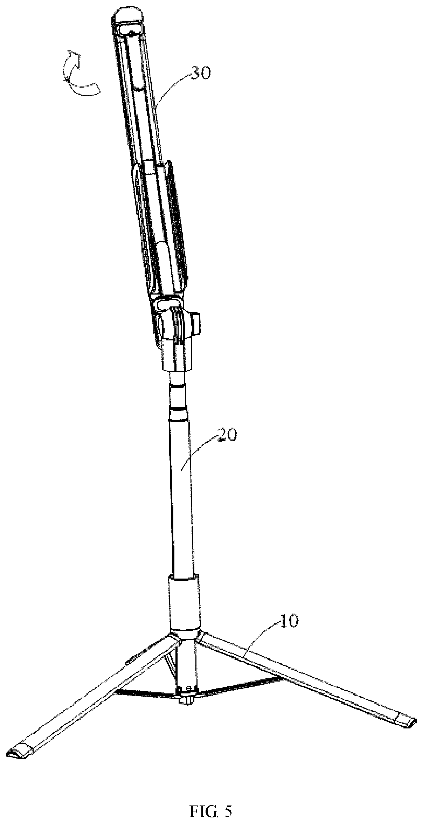

Referring mainly to FIG. 5, in the collapsed state, the first top rod 321, the second top rod 322, the first middle rod 331, the second middle rod 332, the first bottom rod 341 and the second bottom rod 342 are respectively attached along the main support member 31 to cause the support assembly 30 to form the rod-like structure.

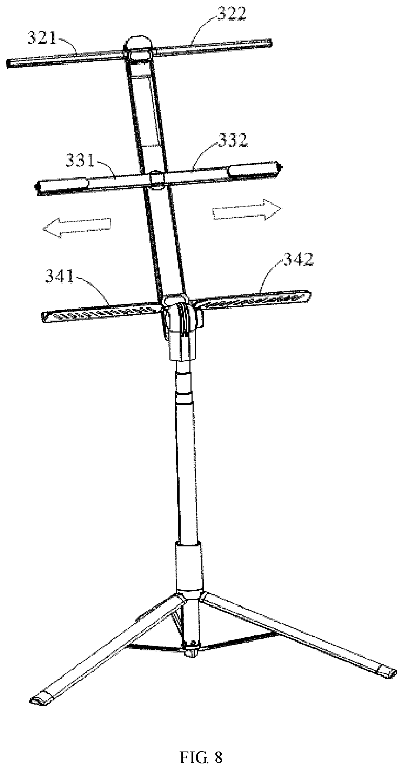

Referring mainly to FIG. 8, in the present embodiment, both the first middle rod 331 and the second middle rod 332 may be tensile rods configured to adjust a length size of the support surface 101 in order to match articles of different lengths. In this way, the need to support articles such as music scores, books or folders of more specifications can be met, which improves the applicability of the foldable support bracket.

As shown in FIG. 2, in an embodiment, the support assembly 30 may further comprise a clamping assembly, the clamping assembly comprises a first compression member and a second compression member for clamping edges of both lateral sides of an article, the first compression member is arranged at an end portion of the first middle rod 331, the second compression member is arranged at an end portion of the second middle rod 332.

In this embodiment, the first compression member and the second compression member both comprise an upper shell 411, a lower shell 412, a press block 413 and a torsion spring, the upper shell 411 is fixed to a front surface of the tensile rod, the lower shell 412 is connected to the upper shell 411 and fixed to a back surface of the tensile rod, the upper shell 411 is provided with two insertion holes for insertion of both ends of a torsion shaft, the torsion spring is sleeved on the torsion shaft, one end of the torsion spring abuts against and is connected with the press block 413, the other end of the torsion spring abuts against and is connected with the upper shell 411, an end of the press block 413 is connected to the upper shell 411 by the torsion shaft. In this way, the solidity of the foldable support bracket for supporting an article can be further enhanced, and the article can be effectively prevented from slipping off.

In this embodiment, the press block 413 may be of transparent material such as acrylic, so that when clamping the edges of an article such as a music score or a book, users can effectively view contents such as text or pictures under the clamping assembly through the transparent clamping assembly, which greatly enhances the user experience.

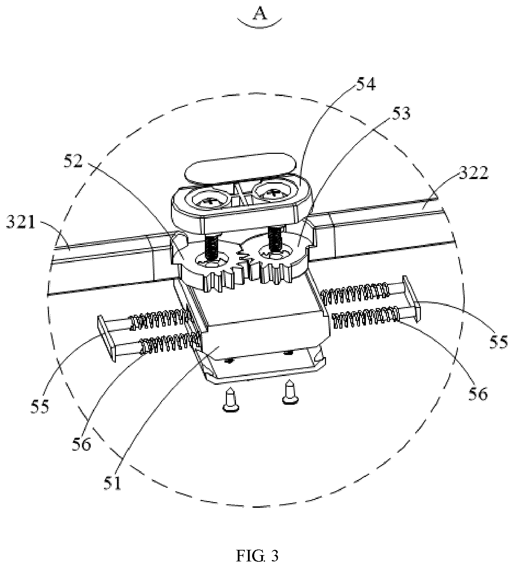

In order to further enhance the applicability of the foldable support bracket to fit more specifications of articles, referring to FIGS. 2 and 3, the main support member 31 is provided with a slide groove 31a along its length, and an end of the first top rod 321 and an end of the second top rod 322 are both slidably arranged in the slide groove 31a by a slidable rotary mechanism configured to adjust a width size of the support surface 101 in order to match articles of different widths.

Referring mainly to FIG. 3, the slidable rotary mechanism comprises a slidable block 51, a first toothed block 52, a second toothed block 53 and a first fixed block 54 slidably arranged in the slide groove 31a, one end of the first toothed block 52 is fixed to the first top rod 321, the other end of the first toothed block 52 is constrained between the slidable block 51 and the first fixed block 54 in a rotatable manner by a first rotation shaft, one end of the second toothed block is fixed to the second top rod 322, the other end of the second toothed block 53 is constrained between the slidable block 51 and the first fixed block 54 in a rotatable manner by a second rotation shaft. In this way, it is possible to achieve the function of foldable collapsing and deploying of the first linkage component 32, and at the same time also enhance the applicability of the support bracket.

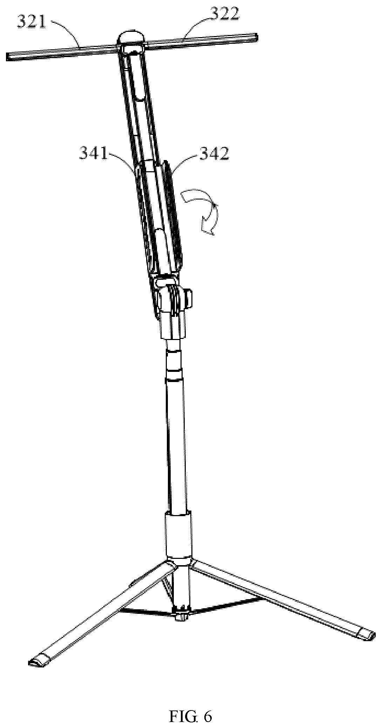

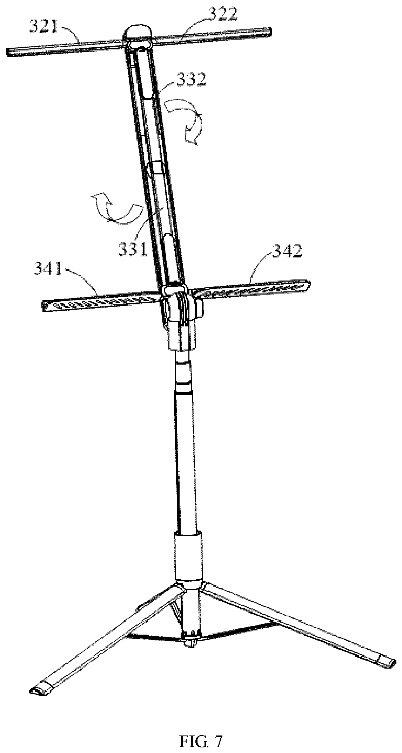

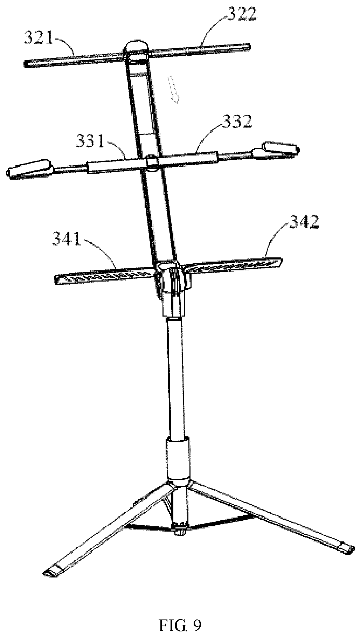

In use, in conjunction with FIGS. 1 and 5, the support assembly 30 can be rotated upwardly to open and the foot stand assembly 10 can be operated to slide downwardly to open, and the foot stand assembly 10 can be placed on the ground; referring to FIGS. 5 and 6, the first top rod 321 and the second top rod 322 are then rotated to open; referring to FIGS. 6 and 7, the first bottom rod 341 and the second bottom rod 342 are then rotated to open; referring to FIGS. 7 and 8, the first middle rod 331 and the second middle rod 332 are then rotated to open; referring to FIGS. 8 and 9, the length of the first middle rod 331 and the length of the second middle rod 332 are then stretched according to the length of the article, so as to adjust the length of the support surface 101; referring to FIGS. 9 and 10, the first top rod 321 and the second top rod 322 are then operated to slide according to the width of the article, so as to adjust the width of the support surface 101; and finally, the article such as a music score is placed onto the support surface 101, and the edges of both lateral sides of the article are respectively clamped by means of the first compression member and the second compression member.

Referring to FIG. 3, in an embodiment, the slidable rotary mechanism may further comprise two friction blocks 55, the slidable block 51 comprises a slidable upper shell and a slidable lower shell, the slidable upper shell and the slidable lower shell enclose a mounting cavity, the two friction blocks 55 are placed in the mounting cavity, and groove walls on two lateral sides of the mounting cavity are both provided with an avoidance port for an outer end of each of the two friction blocks 55 to pass through, one end of each of the two friction blocks 55 is sleeved with a resilient member 56, the other end of each of the two friction blocks 55 abuts against a groove wall on each of two lateral sides of the slide groove 31a respectively.

It should be understood that, by arranging the friction blocks 55 to resiliently abut against the groove walls of the slide groove 31a, it can be used to protect the slidable block 51 to avoid wear and tear of the slidable block 51 caused by contacting with the groove walls of the slide groove 31a during sliding, which prolongs the service life of the slidable block 51, and can satisfy the smoothness of sliding movement of the slidable block 51 in the slide groove 31a.

Referring to FIG. 2, in an embodiment, the first bottom rod 341 and the second bottom rod 342 are both provided with a pallet 343 for holding a bottom of an article, so as to further enhance the stability of the foldable support bracket for supporting articles.

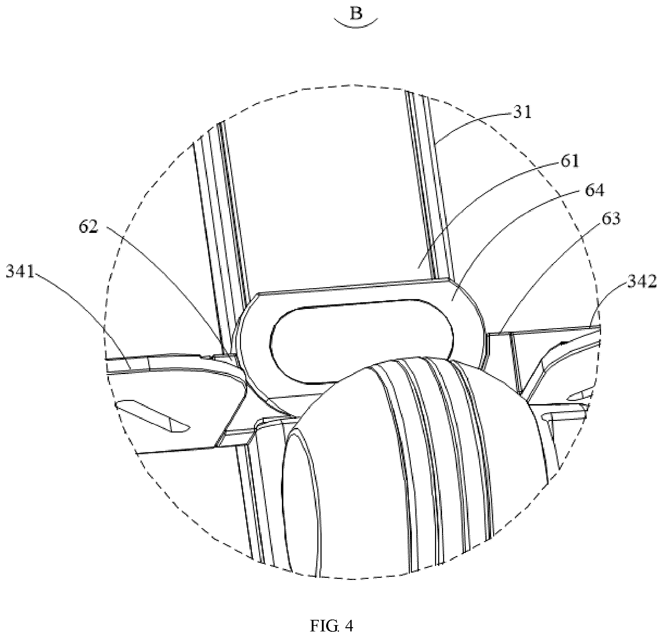

In order to achieve the function of foldable collapsing and deploying of the third linkage component 34, referring to FIGS. 2 and 4, in an embodiment, an end of the first bottom rod 341 and an end of the second bottom rod 342 are both arranged on the main support member 31 by means of a rotary assembly, the rotary assembly comprises a support block 61, a third toothed block 62, a fourth toothed block 63 and a second fixed block 64 provided on the main support member 31, one end of the third toothed block 62 is fixed to the first bottom rod 341, the other end of the third toothed block 62 is constrained between the support block 61 and the second fixed block 64 in a rotatable manner by a third rotation shaft, one end of the fourth toothed block 63 is fixed to the second bottom rod 342, the other end of the fourth toothed block 63 is constrained between the support block 61 and the second fixed block 64 in a rotatable manner by a fourth rotation shaft.

Similarly, in this embodiment, the second linkage component 33 may also adopt a similar connection structure as the rotary assembly connected to the third linkage component 34 to achieve rotatably deploying and collapsing, which is not specifically limited herein.

Referring to FIG. 10, when the support assembly 30 is in the deployed state, the central lines of both the first top rod 321 and the second top rod 322 may be on the same line which may be perpendicular to or slightly inclined relative to the central line of the main support member 31; the central lines of both the first middle rod 331 and the second middle rod 332 may be on the same line which may be perpendicular to or slightly inclined relative to the central line of the main support member 31; and the central lines of both the first bottom rod 341 and the second bottom rod 342 may be on the same line which may be perpendicular to or slightly inclined relative to the central line of the main support member 31.

Referring to FIG. 5, when the support assembly 30 is in the collapsed state, the central lines of both the first top rod 321 and the second top rod 322 coincide with or are parallel to the central line of the main support member 31; the central lines of both the first middle rod 331 and the second middle rod 332 coincide with or are parallel to the central line of the main support member 31; and the central lines of both the first bottom rod 341 and the second bottom rod 342 coincide with or are parallel to the central line of the main support member 31.

The above mentioned are only optional embodiments of the present application, and are not intended to limit the scope of the present patent defined by the appended claims.

## Claims

1. A foldable support bracket, comprising:
a foot stand assembly (10);
a telescoping rod assembly (20), having a first end and a second end opposite to each other, wherein the foot stand assembly (10) is provided on the first end of the telescoping rod assembly (20); and
a support assembly (30) provided on the second end of the telescoping rod assembly (20) in a collapsible manner, wherein the support assembly (30) has a deployed state and a collapsed state;
wherein, the support assembly (30) comprises at least a main support member (31), a first linkage component (32) and a second linkage component (33), the main support member (31) being rotatably arranged on the second end of the telescoping rod assembly (20) by means of a rotatable shaft (311); the first linkage component (32) being rotatably arranged on the main support member (31); and the second linkage component (33) being rotatably arranged on the main support member (31);
wherein, in the deployed state, the first linkage component (32) and the second linkage component (33) are unfolded to form a support surface (101);
wherein, in the collapsed state, the first linkage component (32) and the second linkage component (33) are respectively attached along the main support member (31) to form a rod-like structure;
wherein the first linkage component (32) is located on a top part of the main support member (31), and the second linkage component (33) is located in a middle part of the main support member (31); the support assembly (30) further comprises a third linkage component (34), the third linkage component (34) being rotatably arranged at a bottom part of the main support member (31);
the first linkage component (32) comprises a first top rod (321) and a second top rod (322), and the first top rod (321) and the second top rod (322) are respectively rotatably arranged on the top part of the main support member (31);
the second linkage component (33) comprises a first middle rod (331) and a second middle rod (332), and the first middle rod (331) and the second middle rod (332) are respectively rotatably arranged on the middle part of the main support member (31);
the third linkage component (34) comprises a first bottom rod (341) and a second bottom rod (342), and the first bottom rod (341) and the second bottom rod (342) are respectively rotatably arranged on the bottom part of the main support member (31);
in the deployed state, the first top rod (321), the first middle rod (331) and the first bottom rod (341) are respectively located on one same side of the main support member (31), and the second top rod (322), the second middle rod (332) and the second bottom rod (342) are respectively located on the other side of the main support member (31), so as to form the support surface (101) by unfolding the respective rods;
in the collapsed state, the first top rod (321), the second top rod (322), the first middle rod (331), the second middle rod (332), the first bottom rod (341) and the second bottom rod (342) are respectively attached along the main support member (31) to form the rod-like structure;
**characterised in that** the main support member (31) is provided with a slide groove (31a) along its length, and an end of the first top rod (321) and an end of the second top rod (322) are both slidably arranged in the slide groove (31a) by a slidable rotary mechanism configured to adjust a width size of the support surface (101) in order to match articles of different widths;
wherein the slidable rotary mechanism comprises a slidable block (51), a first toothed block, (52), a second toothed block (53) and a first fixed block (54) slidably arranged in the slide groove, (31a), one end of the first toothed block (52) being fixed to the first top rod, (321), the other end of the first toothed block (52) being constrained between the slidable block (51) and the first fixed block (54) in a rotatable manner by a first rotation shaft, one end of the second toothed block (53) being fixed to the second top rod, (322), the other end of the second toothed block (53) being constrained between the slidable block (51) and the first fixed block (54) in a rotatable manner by a second rotation shaft.

2. The foldable support bracket according to claim 1, wherein the first middle rod (331) and the second middle rod (332) are tensile rods configured to adjust a length size of the support surface (101) in order to match articles of different lengths.

3. The foldable support bracket according to claim 2, wherein the support assembly (30) further comprises a clamping assembly (40), the clamping assembly (40) comprising a first compression member and a second compression member for clamping edges of both lateral sides of an article, the first compression member being arranged at an end portion of the first middle rod (331), the second compression member being arranged at an end portion of the second middle rod (332).

4. The foldable support bracket according to claim 3, wherein the first compression member and the second compression member both comprise an upper shell (411), a lower shell (412), a press block (413) and a torsion spring, the upper shell (411) being fixed to a front surface of the tensile rod, the lower shell (412) being connected to the upper shell (411) and fixed to a back surface of the tensile rod, the upper shell (411) being provided with two insertion holes for insertion of both ends of a torsion shaft, the torsion spring being sleeved on the torsion shaft, one end of the torsion spring abutting against and connected with the press block (413), the other end of the torsion spring abutting against and connected with the upper shell (411), an end of the press block (413) is connected to the upper shell (411) by the torsion shaft, wherein the press block (413) is of transparent material.

5. The foldable support bracket according to claim 1, wherein the slidable rotary mechanism further comprises two friction blocks (55), the slidable block (51) comprising a slidable upper shell and a slidable lower shell, the slidable upper shell and the slidable lower shell enclosing a mounting cavity, the two friction blocks (55) being placed in the mounting cavity, and groove walls on two lateral sides of the mounting cavity are both provided with an avoidance port for an outer end of each of the two friction blocks (55) to pass through, one end of each of the two friction blocks (55) being sleeved with a resilient member (56), the other end of each of the two friction blocks (55) abutting against a groove wall on each of two lateral sides of the slide groove (31a) respectively.

6. The foldable support bracket according to claim 1, wherein the first bottom rod (341) and the second bottom rod (342) are both provided with a pallet (343) for holding a bottom of an article.

7. The foldable support bracket according to claim 1, wherein an end of the first bottom rod (341) and an end of the second bottom rod (342) are both arranged on the main support member (31) by means of a rotary assembly, the rotary assembly comprising a support block (61), a third toothed block (62), a fourth toothed block (63) and a second fixed block (64) provided on the main support member (31), one end of the third toothed block (62) being fixed to the first bottom rod (341), the other end of the third toothed block (62) being constrained between the support block (61) and the second fixed block (64) in a rotatable manner by a third rotation shaft, one end of the fourth toothed block (63) being fixed to the second bottom rod (342), the other end of the fourth toothed block (63) being constrained between the support block (61) and the second fixed block (64) in a rotatable manner by a fourth rotation shaft.

## Patentansprüche

1. Zusammenklappbarer Ständer, umfassend:
eine Fußgestellbaugruppe (10);
eine Teleskopstangenbaugruppe (20), die ein erstes Ende und ein zweites Ende, die einander gegenüberliegen, aufweist, wobei die Fußgestellbaugruppe (10) an dem ersten Ende der Teleskopstangenbaugruppe (20) angeordnet ist; und
eine Auflagebaugruppe (30), die zusammenklappbar an dem zweiten Ende der Teleskopstangenbaugruppe (20) angeordnet ist, wobei die Auflagebaugruppe (30) einen aufgeklappten Zustand und einen zusammengeklappten Zustand aufweist;
wobei die Auflagebaugruppe (30) zumindest ein Hauptstützelement (31), eine erste Gestängebaugruppe (32) und eine zweite Gestängebaugruppe (33) umfasst, wobei das Hauptstützelement (31) mittels einer drehbaren Welle (311) drehbar an dem zweiten Ende der Teleskopstangenbaugruppe (20) angeordnet ist, die erste Gestängebaugruppe (32) drehbar an dem Hauptstützelement (31) angeordnet ist und die zweite Gestängebaugruppe (33) drehbar an dem Hauptstützelement (31) angeordnet ist;
wobei in dem aufgeklappten Zustand die erste Gestängebaugruppe (32) und die zweite Gestängebaugruppe (33) aufgeklappt sind, um eine Auflagefläche (101) zu bilden;
wobei in dem zusammengeklappten Zustand die erste Gestängebaugruppe (32) und die zweite Gestängebaugruppe (33) jeweils entlang dem Hauptstützelement (31) an diesem anliegen, um eine stabförmige Struktur zu bilden;
wobei die erste Gestängebaugruppe (32) an einem oberen Abschnitt des Hauptstützelements (31) angeordnet ist und die zweite Gestängebaugruppe (33) an einem mittleren Abschnitt des Hauptstützelements (31) angeordnet ist, wobei die Auflagebaugruppe (30) ferner eine dritte Gestängebaugruppe (34) umfasst, die drehbar an einem unteren Abschnitt des Hauptstützelements (31) angeordnet ist;
wobei die erste Gestängebaugruppe (32) eine erste obere Stange (321) und eine zweite obere Stange (322) umfasst und die erste obere Stange (321) und die zweite obere Stange (322) jeweils drehbar an dem oberen Abschnitt des Hauptstützelements (31) angeordnet sind;
wobei die zweite Gestängebaugruppe (33) eine erste mittlere Stange (331) und eine zweite mittlere Stange (332) umfasst und die erste mittlere Stange (331) und die zweite mittlere Stange (332) jeweils drehbar an dem mittleren Abschnitt des Hauptstützelements (31) angeordnet sind;
wobei die dritte Gestängebaugruppe (34) eine erste untere Stange (341) und eine zweite untere Stange (342) umfasst und die erste untere Stange (341) und die zweite untere Stange (342) jeweils drehbar an dem unteren Abschnitt des Hauptstützelements (31) angeordnet sind;
wobei in dem aufgeklappten Zustand die erste obere Stange (321), die erste mittlere Stange (331) und die erste untere Stange (341) jeweils auf derselben Seite des Hauptstützelements (31) angeordnet sind und die zweite obere Stange (322), die zweite mittlere Stange (332) und die zweite untere Stange (342) jeweils auf der anderen Seite des Hauptstützelements (31) angeordnet sind, sodass durch Aufklappen der jeweiligen Stangen die Auflagefläche (101) gebildet wird;
wobei in dem zusammengeklappten Zustand die erste obere Stange (321), die zweite obere Stange (322), die erste mittlere Stange (331), die zweite mittlere Stange (332), die erste untere Stange (341) und die zweite untere Stange (342) jeweils entlang dem Hauptstützelement (31) an diesem anliegen, um die stabförmige Struktur zu bilden;
**dadurch gekennzeichnet, dass** das Hauptstützelement (31) entlang seiner Länge mit einer Führungsnut (31a) versehen ist und ein Ende der ersten oberen Stange (321) und ein Ende der zweiten oberen Stange (322) jeweils mittels eines Verschiebe- und Drehmechanismus verschiebbar in der Führungsnut (31a) angeordnet sind, wobei der Verschiebe- und Drehmechanismus dazu ausgebildet ist, die Breite der Auflagefläche (101) einzustellen, um diese an Gegenstände unterschiedlicher Breite anzupassen;
wobei der Verschiebe- und Drehmechanismus einen Schiebeblock (51), einen ersten verzahnten Block (52), einen zweiten verzahnten Block (53) und einen ersten Befestigungsblock (54) umfasst, die in der Führungsnut (31a) verschiebbar angeordnet sind, wobei ein Ende des ersten verzahnten Blocks (52) an der ersten oberen Stange (321) befestigt ist und das andere Ende des ersten verzahnten Blocks (52) mittels einer ersten Drehwelle drehbar zwischen dem Schiebeblock (51) und dem ersten Befestigungsblock (54) gehalten ist, und wobei ein Ende des zweiten verzahnten Blocks (53) an der zweiten oberen Stange (322) befestigt ist und das andere Ende des zweiten verzahnten Blocks (53) mittels einer zweiten Drehwelle drehbar zwischen dem Schiebeblock (51) und dem ersten Befestigungsblock (54) gehalten ist.

2. Zusammenklappbarer Ständer nach Anspruch 1, wobei die erste mittlere Stange (331) und die zweite mittlere Stange (332) ausziehbare Stangen sind, die dazu ausgebildet sind, die Länge der Auflagefläche (101) einzustellen, um diese an Gegenstände unterschiedlicher Länge anzupassen.

3. Zusammenklappbarer Ständer nach Anspruch 2, wobei die Auflagebaugruppe (30) ferner eine Klemmbaugruppe (40) umfasst, wobei die Klemmbaugruppe (40) ein erstes Andrückelement und ein zweites Andrückelement zum Festklemmen der Ränder an den beiden seitlichen Seiten eines Gegenstands umfasst, wobei das erste Andrückelement an einem Endabschnitt der ersten mittleren Stange (331) angeordnet ist und das zweite Andrückelement an einem Endabschnitt der zweiten mittleren Stange (332) angeordnet ist.

4. Zusammenklappbarer Ständer nach Anspruch 3, wobei das erste Andrückelement und das zweite Andrückelement jeweils eine obere Gehäuseschale (411), eine untere Gehäuseschale (412), einen Druckblock (413) und eine Torsionsfeder umfassen, wobei die obere Gehäuseschale (411) an einer vorderen Oberfläche der ausziehbaren Stange befestigt ist, die untere Gehäuseschale (412) mit der oberen Gehäuseschale (411) verbunden und an einer hinteren Oberfläche der ausziehbaren Stange befestigt ist, die obere Gehäuseschale (411) mit zwei Einstecköffnungen zum Einstecken der beiden Enden einer Torsionswelle versehen ist, die Torsionsfeder auf der Torsionswelle aufgesteckt ist, ein Ende der Torsionsfeder an dem Druckblock (413) anliegt und mit diesem verbunden ist, das andere Ende der Torsionsfeder an der oberen Gehäuseschale (411) anliegt und mit dieser verbunden ist und ein Ende des Druckblocks (413) mittels der Torsionswelle mit der oberen Gehäuseschale (411) verbunden ist, wobei der Druckblock (413) aus einem transparenten Material besteht.

5. Zusammenklappbarer Ständer nach Anspruch 1, wobei der Verschiebe- und Drehmechanismus ferner zwei Reibblöcke (55) umfasst, wobei der Schiebeblock (51) eine verschiebbare obere Gehäuseschale und eine verschiebbare untere Gehäuseschale umfasst, wobei die verschiebbare obere Gehäuseschale und die verschiebbare untere Gehäuseschale einen Aufnahmeraum umschließen, wobei die beiden Reibblöcke (55) in dem Aufnahmeraum angeordnet sind und die beiden seitlichen Nutwände des Aufnahmeraums jeweils mit einer Durchtrittsöffnung für den Durchtritt des äußeren Endes des jeweiligen Reibblocks (55) versehen sind, wobei auf ein Ende jedes der beiden Reibblöcke (55) ein elastisches Element (56) aufgesteckt ist und die anderen Enden der beiden Reibblöcke (55) jeweils an einer der beiden seitlichen Nutwände der Führungsnut (31a) anliegen.

6. Zusammenklappbarer Ständer nach Anspruch 1, wobei die erste untere Stange (341) und die zweite untere Stange (342) jeweils mit einer Auflageplatte (343) zum Abstützen der Unterseite eines Gegenstands versehen sind.

7. Zusammenklappbarer Ständer nach Anspruch 1, wobei ein Ende der ersten unteren Stange (341) und ein Ende der zweiten unteren Stange (342) jeweils mittels einer Drehbaugruppe an dem Hauptstützelement (31) angeordnet sind, wobei die Drehbaugruppe einen Stützblock (61), einen dritten verzahnten Block (62), einen vierten verzahnten Block (63) und einen zweiten Befestigungsblock (64) umfasst, die an dem Hauptstützelement (31) angeordnet sind, wobei ein Ende des dritten verzahnten Blocks (62) an der ersten unteren Stange (341) befestigt ist und das andere Ende des dritten verzahnten Blocks (62) mittels einer dritten Drehwelle drehbar zwischen dem Stützblock (61) und dem zweiten Befestigungsblock (64) gehalten ist, und wobei ein Ende des vierten verzahnten Blocks (63) an der zweiten unteren Stange (342) befestigt ist und das andere Ende des vierten verzahnten Blocks (63) mittels einer vierten Drehwelle drehbar zwischen dem Stützblock (61) und dem zweiten Befestigungsblock (64) gehalten ist.

## Revendications

1. Un support pliable, composé de :
un ensemble pied (10) ;
un ensemble tige télescopique (20), ayant une première extrémité et une deuxième extrémité opposées, dans lequel l'ensemble pied (10) est placé à le premier extrémité de l'ensemble tige télescopique (20) ; et
un ensemble support (30) disposé sur le deuxième extrémité de l'ensemble tige télescopique (20) de manière pliable, dans lequel l'ensemble support (30) a un état déployé et un état replié ;
dans lequel l'ensemble support (30) comprend au moins un élément principal de support (31), un premier composant de liaison (32) et un deuxième composant de liaison (33), l'élément support principal (31) étant disposé de façon rotative à le deuxième extrémité de l'ensemble tige télescopique (20) au moyen d'un arbre rotatif (311) ; le premier composant de liaison (32) étant disposé de façon rotative sur l'élément support principal (31) ; et le deuxième composant de liaison (33) étant disposé de façon rotative sur l'élément support principal (31) ;
dans lequel dans l'état déployé, le premier composant de liaison (32) et le deuxième composant de liaison (33) sont déployés pour former une surface de support (101) ;
dans lequel dans l'état de repli, le premier composant de liaison (32) et le deuxième composant de liaison (33) sont respectivement fixés le long du support principal (31) pour former une structure en forme de tige ;
dans lequel le premier composant de liaison (32) est situé sur une partie supérieure de l'élément support principal (31), et le deuxième composant de liaison (33) est situé au milieu de l'élément support principal (31) ; l'ensemble support (30) comprend en outre un troisième composant de liaison (34), le troisième composant de liaison (34) étant disposé de façon rotative sur une partie inférieure de l'élément support principal (31) ;
le premier composant de liaison (32) comprend une première tige supérieure (321) et une deuxième tige supérieure (322), et la première tige supérieure (321) et la deuxième tige supérieure (322) sont respectivement disposées de manière rotative sur la partie supérieure de l'élément support principal (31) ;
le deuxième composant de liaison (33) comprend une première tige centrale (331) et une deuxième tige centrale (332), et la première tige centrale (331) ainsi que la deuxième tige centrale (332) sont respectivement disposées de façon rotative sur la partie centrale de l'élément support principal (31) ;
la troisième tige de liaison (34) comprend une première tige inférieure (341) et une deuxième tige inférieure (342), et la première tige inférieure (341) ainsi que la deuxième tige inférieure (342) sont respectivement disposées de façon rotative sur la partie inférieure de l'élément support principal (31) ;
dans l'état déployé, la première tige supérieure (321), la première tige centrale (331) et la première tige inférieure (341) sont respectivement situées d'un même côté que l'élément support principal (31), et la deuxième tige supérieure (322), la deuxième tige centrale (332) et la deuxième tige inférieure (342) sont respectivement situées de l'autre côté de l'élément support principal (31), de façon à former la surface de support (101) en dépliant les tiges respectives ;
dans l'état replié, la première tige supérieure (321), la deuxième tige supérieure (322), la première tige centrale (331), la deuxième tige centrale (332), la première tige inférieure (341) et la deuxième tige inférieure (342) sont respectivement fixées le long de l'élément support principal (31) pour former la structure en forme de tige ;
**caractérisé en ce que**
l'élément support principal (31) est doté d'une rainure de coulissement (31a) sur toute sa longueur, et une extrémité de la première tige supérieure (321) ainsi qu'une extrémité de la deuxième tige supérieure (322) sont toutes deux disposées de manière coulissante dans la rainure de coulissement (31a) par un mécanisme rotatif coulissant configuré pour ajuster la largeur de la surface de support (101) afin d'adapter les articles de différentes largeurs ;
dans lequel le mécanisme rotatif coulissant comprend un bloc coulissant (51), un premier bloc dentelé (52), un deuxième bloc dentelé (53) et un premier bloc fixe (54) disposés de manière coulissante dans la rainure de coulissement (31a), une extrémité du premier bloc dentelé (52) étant fixée à la première tige supérieure (321), l'autre extrémité du premier bloc dentelé (52) étant contrainte entre le bloc coulissant (51) et le premier bloc fixe (54) de manière rotative par un premier arbre de rotation, une extrémité du deuxième bloc dentelé (53) étant fixée à la deuxième tige supérieure (322), l'autre extrémité du deuxième bloc dentelé (53) étant fixée entre le bloc coulissant (51) et le premier bloc fixe (54) de manière rotative par un deuxième arbre de rotation.

2. Le support pliable selon la revendication 1, dans lequel la première tige centrale (331) et la deuxième tige centrale (332) sont des tiges de traction configurées pour ajuster la longueur de la surface de support (101) afin de correspondre à des articles de longueurs différentes.

3. Le support pliable selon la revendication 2, dans lequel l'ensemble support (30) comprend en outre un ensemble de serrage (40), l'ensemble de serrage (40) comprenant un premier élément de compression et un deuxième élément de compression pour serrer les bords des deux côtés latéraux d'un article, le premier élément de compression étant disposé à une extrémité de la première tige centrale (331), le deuxième élément de compression étant disposé à une extrémité de la deuxième tige centrale (332).

4. Le support pliable selon la revendication 3, dans lequel le premier élément de compression et le deuxième élément de compression comprennent tous les deux une coque supérieure (411), une coque inférieure (412), un bloc de pression (413) et un ressort de torsion, la coque supérieure (411) étant fixée à une surface avant de la tige de traction, la coque inférieure (412) étant reliée à la coque supérieure (411) et fixée à une surface arrière de la tige de traction, la coque supérieure (411) étant dotée de deux trous d'insertion pour l'insertion des deux extrémités d'un arbre de torsion, le ressort de torsion étant protégé par un manchon sur l'arbre de torsion, une extrémité du ressort de torsion adossée et reliée au bloc de pression (413), l'autre extrémité du ressort de torsion adossée et reliée à la coque supérieure (411), une extrémité du bloc de pression (413) étant reliée à la coque supérieure (411) par l'arbre de torsion, dans lequel le bloc de pression (413) est en matériau transparent.

5. Le support pliable selon la revendication 1, dans lequel le mécanisme rotatif coulissant comprend en outre deux blocs de friction (55), le bloc coulissant (51) comprenant une coque supérieure coulissante et une coque inférieure coulissante, la coque supérieure coulissante et la coque inférieure coulissante enveloppant une cavité de montage, les deux blocs de friction (55) étant placés dans la cavité de fixation, et les parois de rainures sur deux côtés latéraux de la cavité de montage sont toutes deux dotées d'un orifice d'évitement pour traverser une extrémité extérieure de chacun des deux blocs de friction (55), une extrémité de chacun des deux blocs de friction (55) étant enveloppée d'un élément résilient (56), l' autre extrémité de chacun des deux blocs de friction (55) étant en butée contre une paroi de rainure sur chacun des deux côtés latéraux de la rainure (31a), respectivement.

6. Le support pliable selon la revendication 1, dans lequel la première tige inférieure (341) et la deuxième tige inférieure (342) sont toutes deux dotées d'une palette (343) pour maintenir le fond d'un article.

7. Le support pliable selon la revendication 1, dans lequel une extrémité de la première tige inférieure (341) et une extrémité de la deuxième tige inférieure (342) sont toutes deux disposées sur l'élément support principal (31) au moyen d'un assemblage rotatif, l'ensemble rotatif comprenant un bloc de support (61), un troisième bloc dentelé (62), un quatrième bloc dentelé (63) et un deuxième bloc fixe (64) étant fixé à l'élément support principal (31), une extrémité du troisième bloc dentelé (62) étant fixée au premier bloc inférieur (341), l'autre extrémité du troisième bloc dentelé (62) étant fixée entre le bloc de support (61) et le deuxième bloc fixe (64) de manière rotative par un troisième arbre de rotation, une extrémité du quatrième bloc dentelé (63) étant fixée à la deuxième tige inférieure (342), l'autre extrémité du quatrième bloc dentelé (63) étant fixée entre le bloc de support (61) et le deuxième bloc fixe (64) de manière rotative par un quatrième arbre de rotation.
